# EUROPÄISCHE PATENTSCHRIFT

(11) **EP 1 281 693 B1**
(45) Veröffentlichungstag und Bekanntmachung des Hinweises auf die Patenterteilung: **03.08.2011**
(21) Anmeldenummer: 02013856.6
(22) Anmeldetag: 22.06.2002
(51) Int. Cl.: C04B 28/02

(54) **Angemachte Mörtelmischung für einen Mittelbettmörtel zum Verlegen großformatiger Bodenplatten**
Ready-made mortar mix for a mid-bed mortar for laying a large format floor covering
Mélange de mortier prêt-à-l'emploi pour un mortier de collage moyen pour poser un revêtement de sol de grand format

(30) Priorität: 30.07.2001 DE 10137231
(43) Veröffentlichungstag der Anmeldung: 05.02.2003
(73) Patentinhaber: quick-mix Gruppe GmbH & Co. KG, 49090 Osnabrück (DE)
(72) Erfinder: Hamann, Dietmar, 45078 Osnabrück (DE); Simon, Walter, 56743 Mendig (DE)
(74) Vertreter: Gesthuysen, von Rohr & Eggert

(56) Entgegenhaltungen:
- EP-A- 0 985 646
- DE-C- 4 218 143

## Beschreibung

Die Erfindung betrifft eine angemachte Mörtelmischung für einen Mittelbettmörtel zum Verlegen von großformatigen Bodenplatten, vorzugsweise schweren Natursteinplatten.

Nach dem derzeitigen Stand der Technik im Bodenverlegungsbereich gibt es je nach vorhandener Aufbauhöhe drei unterschiedliche Mörtelaufbauten unterhalb des Belages:
Dickbett für Aufbauhöhen über 15 mm bis zu einigen Zentimetern,
Mittelbett für Aufbauhöhen von 10 bis 25 mm,
Dünnbett für Aufbauhöhen von 3 bis 10 mm.

Im Mittelbettbereich sind die vorhandenen Systeme, bezogen auf die Auftragsdicke, nicht immer so stabil, daß sie schwere Natursteinplatten und sonstige schwere, großformatige Belagstoffe problemlos aufnehmen können.
Mittelbettmörtel ist in der Regel ein abgewandelter Dünnbettmörtel mit etwas gröberem Kornaufbau bis 1 mm Größtkorn, der verschiedene chemische Zusätze enthält.

Zur Erstellung von Steinmauerwerken mit einer Fugenstärke zwischen 3 und 12 mm wird in der DE 42 18 143 C1 ein Schmalfugenmörtel vorgeschlagen, der einen unter mechanischer Krafteinwirkung zerstörbaren körnigen Zuschlag mit einem Kornanteil aufweist, dessen mittlerer Durchmesser größer ist als die Dicke der auszubildenden Mörtelfuge. Nach Auftrag des Schmalfugenmörtels werden durch leichtes Klopfen auf die Steine der nächsten Steinreihe die das Fugenmaß übersteigenden Anteile des Leichtzuschlags zertrümmert, ohne daß der Mörtel seitlich zwischen den Steinen herausquillt. Daraus läßt sich aber keine Lehre zum besseren Verlegen schwerer Natursteinplatten ableiten.

Um das Kammbett insgesamt stabiler zu machen und ein Korrigieren der schweren Bodenbelagstoffe zuzulassen, so daß ein Ausrichten und ebenflächiges Verlegen des Belagstoffes möglich wird, wurde erfindungsgemäß ein Mittelbettmörtel, der Bindemittelzusätze und Zuschläge aus dichtem Gestein sowie Leichtzuschläge mit zerbrechlichem Korn enthält, so eingestellt, daß der Leichtzuschlag mit einem Kornband von 0,5 bis 2,5 mm und einer Menge von 20 bis 120 kg/t vorliegt.
Der Leichtzuschlag ist aus der Gruppe von Bims, Puffperlit, Vermiculit oder Blähton ausgewählt. Der Zuschlag aus dichtem Gestein besteht vorzugsweise aus Quarzsand oder Kalkbrechsand. Als Bindemittel eignen sich Zement und/oder Kalk. Der erfindungsgemäße Trocken-Mittelbettmörtel enthält vorzugsweise Zusätze zur Einstellung des Wasserrückhaltevermögens, Verflüssiger, Luftporenbildner, Stabilisatoren oder Verzögerer. Auch ein Härtungsbeschleuniger kann von Nutzen sein.

Die EP 0 985 646 A1 betrifft einen Trocken-Dünnbettmörtel, welcher Bindemittel, Zuschlag und Zusätze enthält, wobei der Zuschlag aus dichtem Gestein und porigem wasseransaugendem Leichtzuschlag besteht, wobei das Größtkorn des Zuschlags der mittleren Fugendicke entspricht und der Anteil des dichten Gesteins im Zuschlag mindestens 85 Vol.-% beträgt, sowie eine unter Verwendung dieses Trocken-Dünnbettmörtels hergestellte angemachte Mörtelmischung.

Gegenstand der vorliegenden Erfindung ist eine angemachte Mörtelmischung für einen Mittelbettmörtel zum Verlegen großformatiger Bodenplatten, insbesondere schwerer Natursteinplatten, gemäß Patentanspruch 1; weitere Ausgestaltungen sind Gegenstand der betreffenden Unteransprüche (Patentansprüche 1, bis 13).

Weiterer Gegenstand der vorliegenden Erfindung ist die Verwendung der angemachten Mittelbettmörtelmischung nach der vorliegenden Erfindung gemäß Patentanspruch 14.

Gegenstand der vorliegenden Erfindung ist somit eine angemachte Mörtelmischung für einen Mittelbettmörtel zum Verlegen großformatiger Bodenplatten, insbesondere schwerer Natursteinplatten, wobei die angemachte Mörtelmischung hergestellt ist durch Zusammenfügen von 100 kg eines Trocken-Mittelbettmörtels, welcher Bindemittelzusätze und Zuschläge aus dichtem Gestein sowie Leichtzuschläge mit zerbrechlichem Korn in einem Kornband von 0,5 bis 2,5 mm und in einer Menge von 20 bis 120 kg pro Tonne des Trocken-Mittelbettmörtels enthält, mit 20 bis 50 kg Wasser, je nach Saugverhalten des Steines, und anschließendem ausreichendem Mischen, wobei die angemachte Mörtelmischung eine Viskosität von 1,5 bis 1,75 Ncm, je nach Saugverhalten der zu verlegenden Steine, aufweist.

Eine erfindungsgemäße angemachte Mörtelmischung für einen Mittelbettmörtel kann beispielsweise ausgehend von ein nachfolgend angegebenen Trockenmischung hergestellt werden:

| |
|---|
| 350 bis 450 kg Portlandzement |
| 30 bis 50 kg Rheinischer Trass |
| 500 bis 600 kg Sand |
| 20 bis 120 kg Leichtzuschlag eines Kornbands von 0,5 bis 2,50 mm |
| 30 bis 50 kg Zusätze |

Das Anmischen und Verarbeiten des Trockenmörtels erfolgt wie bei bekannten Mittelbett-Systemen durch Anmischen mit einem Motorquirl und Aufziehen des Mörtelbetts mit einer entsprechenden Zahnkelle. Die Einlagerung von Stützkörnern in Form von Bimszuschlagkorn führt dazu, daß das Kammbett insgesamt stabiler wird und daß diese Körner dank ihrer abstützenden Wirkung die hohe Last beim Verlegen von schweren Bodenbelagstoffen aufnehmen und abfangen. Trotzdem lassen sie ein Korrigieren zu, weil sie beim Ausrichten des Belagstoffes durch die Druckbelastung zerbrechen oder sich so zusammenschieben, daß ein Ausrichten und ein ebenflächiges Verlegen des Belagstoffes möglich wird. Durch die Zugabe der Bimskörner und ihre Größe wird eine bessere Tragfähigkeit des Kammbettes erzielt. Das gilt auch für andere bekannte Leichtzuschläge mit zerbrechlichem Korn wie Puffperlit, Vermiculit oder Blähton.

Die angemachte Mörtelmischung nach der Erfindung wird durch Zusammenfügen von 100 kg des erfindungsgemäßen Trocken-Mittelbettmörtels mit 20 bis 50 kg Wasser je nach Saugverhalten der zu verlegenden Steine und anschließendes ausreichendes Mischen erreicht. Auch die Viskosität der angemachten Mörtelmischung im Bereich von 1,5 bis 1,75 Ncm richtet sich nach dem Saugvermögen der zu verlegenden Steine.

Gegenstand der Erfindung ist auch die Verwendung der angemachten Mörtelmischung zum Verlegen von großformatigen Bodenplatten, insbesondere schweren Natursteinplatten.

Ein Mittelbettmörtel nach der Erfindung besteht beispielsweise aus:

| | | | | |
|---|---|---|---|---|
| 350 | bis | 450 | kg | Portlandzement |
| 30 | bis | 50 | kg | Rheinischer Trass |
| 500 | bis | 600 | kg | Sand |
| 20 | bis | 120 | kg | Leichtzuschlag eines Kornbands von 0,5 bis 2,50 mm |
| 30 | bis | 50 | kg | Zusätze |

Das Anmischen und Verarbeiten des Trockenmörtels erfolgt wie bei bekannten Mittelbett-Systemen durch Anmischen mit einem Motorquirl und Aufziehen des Mörtelbetts mit einer entsprechenden Zahnkelle. Die Einlagerung von Stützkörnern in Form von Bimszuschlagkorn führt dazu, daß das Kammbett insgesamt stabiler wird und daß diese Körner dank ihrer abstützenden Wirkung die hohe Last beim Verlegen von schweren Bodenbelagstoffen aufnehmen und abfangen. Trotzdem lassen sie ein Korrigieren zu, weil sie beim Ausrichten des Belagstoffes durch die Druckbelastung zerbrechen oder sich so zusammenschieben, daß ein Ausrichten und ein ebenflächiges Verlegen des Belagstoffes möglich wird. Durch die Zugabe der Bimskörner und ihre Größe wird eine bessere Tragfähigkeit des Kammbettes erzielt. Das gilt auch für andere bekannte Leichtzuschläge mit zerbrechlichem Korn wie Puffperlit, Vermiculit oder Blähton.

Die angemachte Mörtelmischung wird durch Zusammenfügen von 100 kg des erfindungsgemäßen Trocken-Mittelbettmörtels mit 20 bis 50 kg Wasser je nach Saugverhalten der zu verlegenden Steine und anschließendes ausreichendes Mischen erreicht. Auch die Viskosität der angemachten Mörtelmischung im Bereich von 1,5 bis 1,75 Ncm richtet sich nach dem Saugvermögen der zu verlegenden Steine.

Gegenstand der Erfindung ist auch die Verwendung des Mörtels bzw. Mittelbettmörtels zum Verlegen von großformatigen Bodenplatten, insbesondere schweren Natursteinplatten.

## Patentansprüche

1. Angemachte Mörtelmischung für einen Mittelbettmörtel zum Verlegen großformatiger Bodenplatten, insbesondere schwerer Natursteinplatten, wobei die angemachte Mörtelmischung hergestellt ist durch Zusammenfügen von 100 kg eines Trocken-Mittelbettmörtels, welcher Bindemittelzusätze und Zuschläge aus dichtem Gestein sowie Leichtzuschläge mit zerbrechlichem Korn in einem Kornband von 0,5 bis 2,5 mm und in einer Menge von 20 bis 120 kg pro Tonne des Trocken-Mittelbettmörtels enthält, mit 20 bis 50 kg Wasser, je nach Saugverhalten des Steines, und anschließendem ausreichendem Mischen, wobei die angemachte Mörtelmischung eine Viskosität von 1,5 bis 1,75 Ncm, je nach Saugverhalten der zu verlegenden Steine, aufweist.

2. Angemachte Mörtelmischung nach Anspruch 1, **dadurch gekennzeichnet, daß** der Leichtzuschlag aus der Gruppe von Bims, Puffperlit, Vermiculit oder Blähton ausgewählt ist.

3. Angemachte Mörtelmischung nach Anspruch 1 oder 2, **dadurch gekennzeichnet, daß** das dichte Gestein Quarzsand oder Kalkbrechsand ist.

4. Angemachte Mörtelmischung nach Anspruch 1 bis 3, **dadurch gekennzeichnet, daß** das Bindemittel Zement und Kalk ist.

5. Angemachte Mörtelmischung nach einem der Ansprüche 1 bis 4, **dadurch gekennzeichnet, daß** das dichte Gestein Quarzsand ist.

6. Angemachte Mörtelmischung nach einem der Ansprüche 1 bis 5, **dadurch gekennzeichnet, daß** der Trocken-Mittelbettmörtel einen Zusatz zur Einstellung des Wasserrückhaltevermögens enthält.

7. Angemachte Mörtelmischung nach einem der Ansprüche 1 bis 6, **dadurch gekennzeichnet, daß** der Trocken-Mittelbettmörtel als Zusatz einen Verflüssiger enthält.

8. Angemachte Mörtelmischung nach einem der Ansprüche 1 bis 7, **dadurch gekennzeichnet, daß** der Trocken-Mittelbettmörtel als Zusatz einen Luftporenbildner enthält.

9. Angemachte Mörtelmischung nach einem der Ansprüche 1 bis 8, **dadurch gekennzeichnet, daß** der Trocken-Mittelbettmörtel als Zusatz einen Stabilisator enthält.

10. Angemachte Mörtelmischung nach einem der Ansprüche 1 bis 9, **dadurch gekennzeichnet, daß** der Trocken-Mittelbettmörtel als Zusatz einen Verzögerer enthält.

11. Angemachte Mörtelmischung nach einem der Ansprüche 1 bis 10, **dadurch gekennzeichnet, daß** der Trocken-Mittelbettmörtel als Zusatz einen Erhärtungsbeschleuniger enthält.

12. Angemachte Mörtelmischung nach einem der vorherigen Ansprüche, **dadurch gekennzeichnet, daß** der Trocken-Mittelbettmörtel aus
| | | | | |
|---|---|---|---|---|
| 350 | bis | 450 | kg | Portlandzement |
| 30 | bis | 50 | kg | Rheinischem Trass |
| 500 | bis | 600 | kg | Sand |
| 20 | bis | 120 | kg | Leichtzuschlag eines Kornbands von 0,5 bis 2,50 mm |
| 30 | bis | 50 | kg | Zusätzen |
besteht.

13. Angemachte Mörtelmischung nach einem der vorherigen Ansprüche, **dadurch gekennzeichnet, daß** die angemachte Mörtelmischung mit einer Mörtelaufbauhöhe von 10 bis 25 mm eingesetzt wird.

14. Verwendung der angemachten Mittelbettmörtelmischung nach einem der Ansprüche 1 bis 13 zum Verlegen von großformatigen Bodenplatten, insbesondere schweren Natursteinplatten.

## Claims

1. A prepared mortar mixture for a medium-bed mortar used to lay large-sized foundation slabs, in particular heavy, natural stone slabs, wherein the prepared mortar mixture is made by combining 100 kg of a dry medium-bed mortar, which contains added binders and aggregates composed of dense rock, as well as light aggregates with brittle grain in a grain size range of 0.5 to 2.5 mm, and in a quantity of 20 to 120 kg per ton of dry medium-bed mortar, with 20 to 50 kg of water, depending on the absorption properties of the stone, followed by sufficient mixing, wherein the prepared mortar mixture exhibits a viscosity of 1.5 to 1.75 Ncm, depending on the absorption properties of the stones to be laid.

2. The prepared mortar mixture according to claim 1, **characterized in that** the light aggregate is selected from the group of pumice, puffed perlite, vermiculite or expanded clay.

3. The prepared mortar mixture according to claim 1 or 2, **characterized in that** the dense rock is quartz sand or crushed limestone sand.

4. The prepared mortar mixture according to claim 1 to 3, **characterized in that** the binder consists of cement and lime.

5. The prepared mortar mixture according to one of claims 1 to 4, **characterized in that** the dense rock is quartz sand.

6. The prepared mortar mixture according to one of claims 1 to 4, **characterized in that** the dry medium-bed mortar contains an additive for setting the water retention capacity.

7. The prepared mortar mixture according to one of claims 1 to 4, **characterized in that** the dry medium-bed mortar contains a liquefier as an additive.

8. The prepared mortar mixture according to one of claims 1 to 4, **characterized in that** the dry medium-bed mortar contains an air pore former as an additive.

9. The prepared mortar mixture according to one of claims 1 to 4, **characterized in that** the dry medium-bed mortar contains a stabilizer as an additive.

10. The prepared mortar mixture according to one of claims 1 to 4, **characterized in that** the dry medium-bed mortar contains an inhibitor as an additive.

11. The prepared mortar mixture according to one of claims 1 to 4, **characterized in that** the dry medium-bed mortar contains a hardening accelerator as an additive.

12. The prepared mortar mixture according to one of the preceding claims, **characterized in that** the dry medium-bed mortar consists of
| | |
|---|---|
| 350 to 450 kg | Portland cement |
| 30 to 50 kg | Rheinisches Trass |
| 500 to 600 kg | Sand |
| 20 to 120 kg | Light aggregate having a grain size range of 0.5 to 2.50 mm |
| 30 to 50 kg | Additives |

13. The prepared mortar mixture according to one of the preceding claims, **characterized in that** the prepared mortar mixture is used with a mortar buildup height of 10 to 25 mm.

14. Use of the prepared medium-bed mortar mixture according to one of the claims 1 to 13 for laying large-sized foundation slabs, in particular heavy natural stone slabs.

## Revendications

1. Mélange de mortier prêt-à-l'emploi pour un mortier de collage moyen pour poser un revêtement de sol de grand format, en particulier un revêtement de pierre naturelle lourd, sachant que le mélange de mortier prêt-à-l'emploi est fabriqué en réunissant 100 kg d'un mortier de collage moyen sec qui contient des additifs de liant et des agrégats de roche dense ainsi que des agrégats légers avec un grain friable dans une bande de grain de 0,5 à 2,5 mm et dans une quantité de 20 à 120 kg par tonne du mortier de collage moyen sec, avec 20 à 50 kg d'eau selon le comportement d'absorption de la pierre et un mélange ultérieur suffisant, sachant que le mélange de mortier prêt-à-l'emploi présente une viscosité de 1,5 à 1,75 Ncm, selon le comportement d'absorption des pierres à poser.

2. Mélange de mortier prêt-à-l'emploi selon la revendication 1, **caractérisé en ce que** les agrégats légers sont choisis parmi le groupe pierre ponce, perlite, vermiculite ou argile expansée.

3. Mélange de mortier prêt-à-l'emploi selon la revendication 1 ou 2, **caractérisé en ce que** la roche dense est du sable de quartz ou du sable concassé calcaire.

4. Mélange de mortier prêt-à-l'emploi selon l'une des revendications 1 à 3, **caractérisé en ce que** le liant est du ciment et de la chaux.

5. Mélange de mortier prêt-à-l'emploi selon l'une des revendications 1 à 4, **caractérisé en ce que** la roche dense est du sable de quartz.

6. Mélange de mortier prêt-à-l'emploi selon l'une des revendications 1 à 5, **caractérisé en ce que** le mortier de collage moyen sec contient un additif pour ajuster le comportement de rétention d'eau.

7. Mélange de mortier prêt-à-l'emploi selon l'une des revendications 1 à 6, **caractérisé en ce que** le mortier de collage moyen sec contient un liquéfacteur comme additif.

8. Mélange de mortier prêt-à-l'emploi selon l'une des revendications 1 à 7, **caractérisé en ce que** le mortier de collage moyen sec contient un entraîneur d'air comme additif.

9. Mélange de mortier prêt-à-l'emploi selon l'une des revendications 1 à 8, **caractérisé en ce que** le mortier de collage moyen sec contient un stabilisateur comme additif.

10. Mélange de mortier prêt-à-l'emploi, selon l'une des revendications 1 à 9, **caractérisé en ce que** le mortier de collage moyen sec contient un retardateur comme additif.

11. Mélange de mortier prêt-à-l'emploi selon l'une des revendications 1 à 10, **caractérisé en ce que** le mortier de collage moyen sec contient un accélérateur de prise comme additif.

12. Mélange de mortier prêt-à-l'emploi selon l'une des revendications précédentes, **caractérisé en ce que** le mortier de collage moyen sec est composé de
| | |
|---|---|
| 350 à 450 kg | de ciment de Portland |
| 30 à 50 kg | de trass du Rhin |
| 500 à 600 kg | de sable |
| 20 à 120 kg | d'agrégat léger d'une bande de grain de 0,5 à 2,50 mm |
| 30 à 50 kg | d'additifs |

13. Mélange de mortier prêt-à-l'emploi selon l'une des revendications précédentes, **caractérisé en ce que** le mélange de mortier prêt-à-l'emploi est posé avec une hauteur de mortier de 10 à 25 mm.

14. Emploi d'un mélange de mortier prêt-à-l'emploi selon l'une des revendications 1 à 13 pour la pose de revêtement de sol de grand format, en particulier de revêtement de pierre naturelle lourd.
